# EUROPÄISCHE PATENTANMELDUNG

(11) **EP 0 560 204 A1**
(43) Veröffentlichungstag der Anmeldung: **15.09.1993**
(21) Anmeldenummer: 93103429.2
(22) Anmeldetag: 03.03.1993
(51) Int. Cl.: B23Q 7/10

(54) **Werkstückmagazin und Vorrichtung zum Fördern von Werkstücken in eine definierte Abgabe- oder eine Aufnahmeposition**

(30) Priorität: 13.03.1992 DE 4207988
(71) Anmelder: FORD-WERKE AKTIENGESELLSCHAFT, D-50725 Köln (DE); FORD MOTOR COMPANY LIMITED, Brentwood, Essex CM13 3BW (GB); FORD FRANCE SOCIETE ANONYME, F-92506 Rueil Malmaison Cedex (FR)
(72) Erfinder: Froitzheim, Peter, W-5000 Koeln 41 (DE); Rueberg, Walter, W-5204 Lohmar 1 (DE)
(74) Vertreter: Ritzkowsky, Harald, Dipl.-Ing.

(57) **Zusammenfassung**

Bei einem Werkstückmagazin und einer Vorrichtung zum Fördern von Werkstücken in eine definierte Abgabe- oder aus einer Aufnahmeposition, wobei in einem oben offenen Kasten Werkstücke, z.B. Zahnraddrehteile liegend aufgenommen sind, ist das kastenförmige Werkstückmagazin (1) auf seinem Boden (3) mit einem gerichteten, bürstenartigen Bodenbelag (10) versehen und weist Angriffspunkte (18) für Spannvorrichtungen, z.B. Kniehebel-Spannvorrichtungen (19) auf, die am Oberteil (13) einer Schwingtisch-Fördervorrichtung (14) angeordnet sind und mittels der es mit dem Oberteil (13) fest, jedoch leicht lösbar verbindbar ist.

## Beschreibung

Die Erfindung bezieht sich auf ein Werkstückmagazin und eine Vorrichtung zum Fördern von Werkstücken in eine Abgabe- oder aus einer Aufnahmeposition, der im Oberbegriff des Patentanspruches 1 erläuterten Art.

Aus der DE-OS 23 54 377 ist ein Werkstückmagazin sowie eine Be- und Entladevorrichtung dafür, etwa der im Oberbegriff des Patentanspruches 1 erläuterten Art bekannt.

Das Werkstückmagazin zur Abgabe- bzw. Aufnahme von zu bearbeitender bzw. bearbeiteter Werkstücke in Form eines als oben offenen Kastens ist hierbei durch eine Vielzahl von Quer- und Längswänden in Einzelzellen aufgeteilt, die der jeweiligen Größe der aufzunehmenden Werkstücke angepaßt sein müssen. Ein in Längs- und Querrichtung verfahrbarer Greifer ist vorgesehen, um die Werkstücke aus den einzelnen Zellen zu entnehmen und einer Bearbeitungsmaschine zuzuführen. Das Werkstückmagazin ist an seiner Unterseite nach Art einer Palette ausgebildet und kann daher mittels herkömmlicher Flurförderfahrzeuge, wie Gabelstabler und dergleichen, leicht und in beliebig bestimmbarer Reihenfolge von einer Bearbeitungsmaschine zur anderen transportiert werden.

Das bekannte Werkstückmagazin weist jedoch den wesentlichen Nachteil auf, daß die Unterteilung des Werkstückmagazins durch Quer- und Längswände in eine Vielzahl von einzelnen Zellen es erforderlich macht, daß für verschiedene Formen von Werkstücken ein besonderes Werkstückmagazin bereitgehalten werden muß bzw. zumindestens der Einsatz, der die Quer- und Längswände bildet, ausgetauscht werden muß.

Darüber hinaus bringt das bekannte Werkstückmagazin noch den Nachteil mit sich, daß der in Längs- und Querrichtung verfahrbarbare Greifer zum Entladen und Beladen der Werkstücke eine verhältnismäßig aufwendige und teure Automationsvorrichtung darstellt.

Aus der DE-OS 25 46 389 ist ein transportabler Speicher zum Transport von Werkstücken zwischen Bearbeitungsmaschinen bekannt, wobei die Werkstücke durch ein Handhabungsgerät von einer genau definierten Position dem transportablen Speicher entnommen und nach Bearbeitung an einer ebenfalls genau definierten Position einem anderen Speicher zugeführt werden.

Der bekannte transportable Speicher weist hierbei den Nachteil auf, daß er als ein auf einer Förderschienenanlage verfahrbarer vertikaler Dorn ausgebildet ist, der nur in der Lage ist, Werkstücke verschiedener Durchmesser aufzunehmen, solange diese einen bestimmten Innendurchmesser aufweisen. Bei unterschiedlichen Innendurchmessern der Werkstücke muß jedoch eine entsprechende Anpassung des unteren, mit einer Rasteinrichtung versehenen Endes des Dornes vorgenommen werden. Außerdem stellt die Förderschienenanlage eine unerwünschte starre Verkettung von Bearbeitungsmaschinen dar.

Die Aufgabe der Erfindung ist es, ein Werkstückmagazin und eine Vorrichtung zum Fördern von Werkstücken in eine genau definierte Abgabeposition oder aus einer Aufnahmeposition zu schaffen, die eine Vielzahl von gleichformatigen Werkstücken einer Bearbeitungsmaschine zuführen kann bzw. bearbeitete Werkstücke von einer Bearbeitungsmaschine aufnehmen kann und danach das Werkstückmagazin in einfacher Weise zu einer weiteren Bearbeitungsmaschine transportiert werden kann.

Bei der neuen Bearbeitungsmaschine sorgt das Werkstückmagazin wieder für das Fördern der Werkstücke in die definierte Abgabeposition und ein weiteres Werkstückmagazin kann hierbei die bearbeiteten Werkstücke von der Bearbeitungsmaschine aufnehmen und sorgt dafür, daß die Werkstücke aus der Aufnahmeposition weggefördert und angesammelt werden.

Gemäß der Erfindung wird diese Aufgabe gelöst, indem ein Werkstückmagazin und eine Vorrichtung zum Fördern von Werkstücken in eine definierte Abgabeposition oder aus einer Aufnahmeposition gemäß dem Oberbegriff des Patentanspruches 1, die im Kennzeichenteil des Patentanspruches 1 aufgezeigten Merkmale aufweist.

Dadurch, daß das kastenförmige Werkstückmagazin einen gerichteten bürstenartigen Bodenbelag und seitliche Spannvorrichtungen, z.B. Kniehebel-Spannvorrichtungen zur Befestigung am Oberteil einer Schwingtisch-Fördervorrichtung aufweist, wird der Vorteil erzielt, daß das Werkstückmagazin eine Vielzahl von gleichformatigen Werkstücken aufnehmen kann und zielgerichtet zu einer definierten Abgabeposition fördern kann, ohne daß hierfür Veränderungen am Werkstückmagazin erforderlich sind, wenn die gleichformatigen Werkstücke z.B. einen größeren Durchmesser aufweisen.

Dadurch, daß das kastenförmigen Werkstückmagazins mit Längsversteifungen versehen ist, die einerseits dafür sorgen, daß das Gewicht der Vielzahl von verhältnismäßig schweren Werkstücken sicher getragen werden kann und die andererseits dazu dienen, mit Gleitbahnen oder Tragrollen am Oberteil der Schwingtisch-Fördervorrichtung und mit entsprechenden Gleitbahnen oder Tragrollen an einem Oberteil eines verfahrbaren Transportgerätes zusammenzuwirken, wird ein leichtes und einfaches Auswechseln der Werkstückmagazine ermöglicht.

Die sich an die Abgabeposition des Werkstückmagazins anschließenden Automationsvorrichtung können in besonders einfacher Bauweise als einfache Rollenbahnen, Rutschbahnen und dergleichen ausgebildet werden, die daß jeweilige Werkstück unmittelbar in die Beladeposition einer Bearbeitungsmaschine führen.

Das gleiche gilt für die Automationseinrichtungen, die bearbeitete Werkstücke von der Entladeposition einer Bearbeitungsmaschine zur Aufnahmeposition der Werkstückmagazine führen.

Die Erfindung wird anhand eines in der beiliegenden Zeichnung gezeigten Ausführungsbeispieles näher erläutert.
Die Zeichnung zeigt perspektivisch ein erfindungsgemässes Werkstückmagazin und eine Vorrichtung zum Fördern von Werkstücken in eine definierte Abgabeposition oder aus einer Aufnahmeposition und ein verfahrbares Transportgerät;
In der Zeichnung ist ein erfindungsgemäßes Werkstückmagazin 1 in Form eines oben offenen Kastens ausgebildet, in dem eine Vielzahl von Werkstücken 2, z.B. von Zahnradrehteilen liegend aufgenommen sind.

Das kastenförmige Werkstückmagazin 1 besteht in herkömmlicherweise aus einem Boden 3 und vier Seitenwänden 4, 5, 6 und 7, wobei an einer oder zwei Seitenwänden je eine Ein- bzw. Auslauföffnung 8 und 9 angebracht sind, die wechselweise geöffnet oder geschlossen werden müssen. Der Boden 3 des Werkstückmagazins 1 mit einem gerichteten, bürstenartigen Bodenbelag 10 versehen, der ggf. aus verschiedenen, gerichteten Teilbereichen bestehen kann und der in Verbindung mit der Vibration der Schwingtisch-Fördereinrichtung für eine vorbestimmte Bewegung der Werkstücke 2 sorgt. Die Ein- und Auslauföffnungen 8 und 9 können durch entsprechende Schieber, Klappen oder Steckteile 22 (schematisch angedeutet) wahlweise geöffnet oder geschlossen werden.

Das kastenförmige Werkstückmagazin 1 ist vorzugsweise mit Längsversteifungen 11 versehen, um einerseits eine sichere Aufnahme der verhältnismäßig schweren Werkstücke, wie z.B. Zahnradrehteile 2, zu ermöglichen und andererseits wirken diese Längsversteifungen 11 mit Tragrollen 12 oder Gleitbahnen am Oberteil 13 einer Schwingtisch-Fördereinrichtung 14 zusammen.

Die Schwingtisch-Fördereinrichtung 14 besteht in herkömmlicherweise aus einem stationären Traggestell 15 auf dem der Antrieb 16 und die Schwingelemente 17 angeordnet sind, die die Verbindung zum Oberteil 13 herstellen.

Das kastenförmige Werkstückmagazin 1 weist an einer Vielzahl von geeigneten Stellen Angriffspunkte 18 für Spannvorrichtungen, z.B. Kniehebel-Spannvorrichtungen 19 auf, die am Oberteil 13 der Schwingtisch-Fördervorrichtung 14 angeordnet sind.

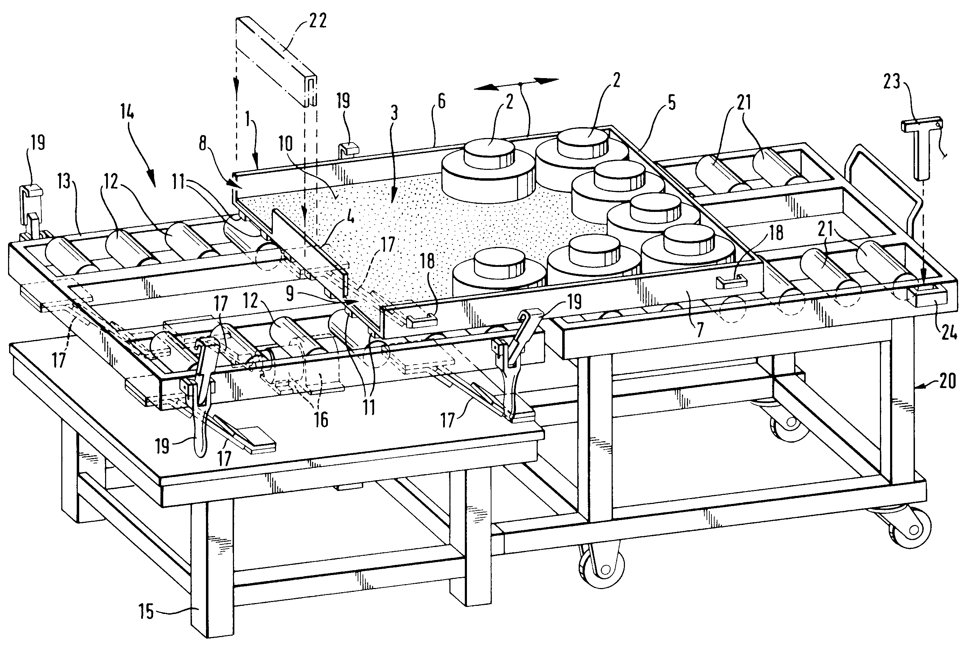

An einem nur schematisch dargestellten verfahrbaren Transportgerät 20 sind wieder eine Vielzahl von Tragrollen 21 oder Gleitbahnen vorgesehen, die derart angeordnet sind, daß nach Lösen der Kniehebel-Spannvorrichtungen 19 das Werkstückmagazin 1 trotz seines durch die Vielzahl von Werkstücken hohen Gewichtes einfach und sicher auf das Transportgerät 20 übergeben werden kann (siehe Fig. 3), mittels dem es zur nächsten Bearbeitungsmaschine gebracht werden kann. Mittels eines Sicherungszapfens 23 kann das Werkstückmagazin 1 auf dem Transportgerät 20 über die Einrichtungen 18 und 24 gesichert werden.

An der nächsten Bearbeitungsmaschine ist wieder eine Schwingtisch-Fördervorrichtung 14 mit einem entsprechenden Oberteil 13 und gleichartigen Kniehebel-Spannvorrichtungen 19 vorgesehen und über die entsprechenden Tragrollen 21 und 12 kann das Werkstückmagazin 1 einfach übergeben werden.

Durch den entsprechend gerichteten, bürstenartigen Bodenbelag 10 und der entsprechenden Schwingrichtung der Schwingtisch-Fördervorrichtung 14 kann sichergestellt werden, daß die Werkstücke jeweils einer definierten Abgabeposition zugeführt werden oder aber von einer definierten Aufnahmeposition weggeführt und im Werkstückmagazin angesammelt werden.

Als Spannvorrichtungen können selbstverständlich auch zentral wirkende, elektromagnetisch oder hydraulisch betätigte Spannvorrichtungs-Systeme eingesetzt werden.

Die Erfindung ist selbstverständlich nicht auf Werkstücke der im Ausführungsbeispiel erläuterten Art beschränkt, sondern ermöglicht durch die entsprechende Auswahl von Parametern eine Investitionskosten verringernde flexible Verknüpfung von mehreren Bearbeitungsmaschinen, die ein bestimmtes Werkstück aufeinanderfolgend bearbeiten müssen.

## Patentansprüche

1. Werkstückmagazin und Vorrichtung zum Fördern von Werkstücken in eine definierte Abgabeposition oder aus einer Aufnahmeposition, wobei in einem oben offenen Kasten Werkstücke, z.B. Zahnraddrehteile, liegend aufgenommen sind,
**dadurch gekennzeichnet**, daß
- das kastenförmige Werkstückmagazin (1) auf seinem Boden (3) mit einem gerichteten, bürstenartigen Bodenbelag (10) versehen ist und an einer Vielzahl von entsprechenden Stellen Angriffspunkte (18) für Spannvorrichtungen, z.B. Kniehebel-Spannvorrichtungen (19) aufweist, die am Oberteil (13) einer Schwingtisch-Fördervorrichtung (14) angeordnet sind und mittels derer das Werkstückmagazin (1) fest, jedoch leicht lösbar mit dem Oberteil (13) verbindbar ist.

2. Werkstückmagazin und Vorrichtung zum Fördern von Werkstücken nach Anspruch 1
**dadurch gekennzeichnet**, daß
- das kastenförmige Werkstückmagazin (1) an seinem Boden mit Längsversteifungen (11) versehen ist, die mit Tragrollen (12) oder Gleitbahnen am Oberteil (13) der Schwingtisch-Fördervorrichtung (14) und mit Tragrollen (21) oder Gleitbahnen an einem verfahrbaren Transportgerät (20) zusammenwirken.

3. Werkstücksmagazin und Vorrichtung zum Fördern von Werkstücken nach Anspruch 1,
**dadurch gekennzeichnet**, daß
- die von der definierten Abgabeposition zur Bearbeitungsmaschine führenden Automationsvorrichtungen, die einfache Form von Rollenbahnen, Rutschen oder dergleichen aufweisen und die von der definierten Aufnahmeposition der Bearbeitungsmaschine zum Werkstückmagazin führenden Automationsvorrichtungen gleichfalls diese einfache Form aufweisen.
